# EUROPÄISCHE PATENTSCHRIFT

(11) **EP 3 159 568 B1**
(45) Veröffentlichungstag und Bekanntmachung des Hinweises auf die Patenterteilung: **15.04.2020**
(21) Anmeldenummer: 16194172.9
(22) Anmeldetag: 17.10.2016
(51) Int. Cl.: F16D 13/52, F16D 13/72, F16D 27/00

(54) **SCHALTBARE LAMELLENKUPPLUNG**
SWITCHABLE MULTI-PLATE CLUTCH
EMBRAYAGE MULTIDISQUE COMMUTABLE

(30) Priorität: 20.10.2015 DE 102015220423
(43) Veröffentlichungstag der Anmeldung: 26.04.2017
(73) Patentinhaber: Stromag GmbH, 59425 Unna (DE)
(72) Erfinder: Frank, Michael, 59427 Unna (DE); Glomm, Matthias, 58640 Iserlohn (DE); Justus, Denis, 44309 Dortmund (DE); Kretschmann, Markus, 59065 Hamm (DE)
(74) Vertreter: Patentanwälte Ruff, Wilhelm, Beier, Dauster & Partner mbB

(56) Entgegenhaltungen:
- DE-A1- 2 118 460
- US-A- 1 746 365
- US-A- 2 956 657

## Beschreibung

Die Erfindung betrifft eine schaltbare Lamellenkupplung mit einem Lamellenpaket, das mehrere mit einem - relativ zu einer Kupplungsdrehachse - radial innenliegenden Kupplungsteil drehschlüssige Lamellenscheiben sowie mehrere mit einem radial außenliegenden Kupplungsteil drehschlüssige Lamellenscheiben aufweist, sowie mit einer axial beweglichen Ankerscheibe, die in einer Lüftstellung das Lamellenpaket freigibt und in einer Reibstellung die Lamellenscheiben des Lamellenpaketes axial gegeneinander presst, sowie mit einem Spulenkörper, in dem eine elektromagnetische Spulenanordnung zur axialen Beaufschlagung der Ankerscheibe integriert ist, wobei wenigstens ein Flüssigkeitskanal zur Zufuhr eines Kühl- oder Schmiermittels zu den Lamellenscheiben in dem radial innen liegenden Kupplungsteil integriert ist, und wobei wenigstens ein Zuführkanal durch den Spulenkörper hindurch verläuft, der einen an einem Außenmantel des Spulenkörpers vorgesehenen Anschlussbereich für eine Kühl- oder Schmiermittelzufuhr mit dem wenigstens einen Flüssigkeitskanal verbindet.

Eine derartige schaltbare Lamellenkupplung ist aus der DE 21 18 460 A1 oder auch aus der US 1 746 365 A bekannt. Die jeweils bekannte Lamellenkupplung weist ein Lamellenpaket auf mit mehreren Lamellenscheiben, die alternierend mit einem radial innen liegenden Kupplungsteil oder einem radial außen liegenden Kupplungsteil drehschlüssig sind. Zudem ist eine axial bewegliche Ankerscheibe vorgesehen, die in einer Lüftstellung das Lamellenpaket freigibt und in einer Reibstellung die Lamellenscheiben axial gegeneinanderpresst. Eine elektromagnetische Spulenanordnung ist zur axialen Beaufschlagung der Ankerscheibe vorgesehen. Zudem ist wenigstens ein Flüssigkeitskanal zur Zufuhr eines Kühl- oder Schmiermittels zu den Lamellenscheiben in dem radial innen liegenden Kupplungsteil integriert. In einem Spulenkörper der elektromagnetischen Spulenanordnung ist ein Zuführkanal vorgesehen, der zwischen einem außenseitigen Anschlussbereich für eine Kühl- oder Schmiermittelzufuhr und dem wenigstens einen Flüssigkeitskanal erstreckt ist.

Eine weitere schaltbare Lamellenkupplung ist allgemein bekannt. Die Lamellenkupplung weist mehrere Lamellenscheiben auf, die alternierend mit einem radial innenliegenden oder mit einem radial außenliegenden Kupplungsteil drehschlüssig verbunden sind. Die Lamellenscheiben sind axial beweglich zu einer Kupplungsdrehachse angeordnet. Hierzu ist ein Außenumfang des radial innenliegenden Kupplungsteiles mit einer Axialverzahnung versehen. Zudem ist der radial außenliegende Kupplungsteil im Bereich eines Innenumfangs ebenfalls mit einer Axialverzahnung versehen, die nach innen gerichtet ist. Die Lamellenscheiben sind entweder radial innenseitig oder radial außenseitig längs der komplementären Axialverzahnungen axial verschiebbar. Sobald die Lamellenscheiben axial gegeneinander gepresst werden, ergibt sich zwischen dem innenliegenden Kupplungsteil und dem außenliegenden Kupplungsteil zwangsläufig ein Kraftschluss, wodurch ein Gleichlauf der beiden Kupplungsteile erzielbar ist. Um die Lamellenscheiben gegeneinander zu pressen, ist die axial bewegliche Ankerscheibe vorgesehen, die durch eine Spulenanordnung elektromagnetisch beaufschlagt wird. Die elektromagnetische Beaufschlagung führt entweder dazu, dass die Ankerscheibe gelüftet, d.h. von den Lamellenscheiben entfernt wird, oder dazu, dass die Ankerscheibe gegen die Lamellenscheiben gepresst wird. Für die entsprechend umgekehrte Axialbewegung der Ankerscheibe kann eine Druckfederanordnung vorgesehen sein, die auf die Ankerscheibe wirkt.

Aufgabe der Erfindung ist es, eine schaltbare Lamellenkupplung der eingangs genannten Art zu schaffen, die auch bei extremen Betriebsbedingungen zuverlässig und fehlerfrei arbeitet.

Diese Aufgabe wird dadurch gelöst, dass der Zuführkanal im Bereich einer Lageranordnung des Spulenkörpers relativ zu dem rotierbaren Kupplungsteil derart mündet, dass im Betrieb der Lamellenkupplung zusätzlich eine Kühlung und Schmierung der Lageranordnung erfolgt. Durch die erfindungsgemäße Lösung ist es möglich, das Lamellenpaket zu kühlen und so auch bei Betriebsbedingungen, die hohe Wärmeentwicklung bewirken, eine zuverlässige Funktion der Lamellenkupplung zu gewährleisten. Zudem kann durch die Zufuhr eines entsprechenden Kühl-oder Schmiermittels auch eine Schmierung und Kühlung weiterer Maschinenelemente zusätzlich zu dem Lamellenpaket vorgenommen werden. Durch die erfindungsgemäße radiale Kühloder Schmiermittelzufuhr von außen her ist eine Versorgung mit Kühl- oder Schmiermittel gewährleistet, ohne dass ein hoher baulicher Aufwand für eine entsprechende Kühl- oder Schmiermittelzufuhr gegeben ist. Zur Kühlung und Schmierung der Lamellenkupplung ist vorzugsweise ein geeignetes Öl vorgesehen. Die erfindungsgemäße Lösung ist in besonders vorteilhafter Weise für Industrieanwendungen einsetzbar. Die Lageranordnung bildet Maschinenelemente im Sinne der Erfindung. Die Lageranordnung wird vorzugsweise durch wenigstens ein Gleit- oder Wälzlager gebildet.

In Ausgestaltung der Erfindung ist der wenigstens eine Flüssigkeitskanal in dem relativ zu dem Spulenkörper rotierbaren, radial innenliegenden Kupplungsteil integriert, und an einem Außenumfang des Kupplungsteils ist eine Umfangsnut vorgesehen, in die der Zuführkanal des Spulenkörpers mündet. Die Umfangsnut gewährleistet, dass eine Kühl- oder Schmiermittelzufuhr durch den stationären Spulenkörper hindurch auch bei rotierendem, radial innenliegendem Kupplungsteil möglich ist.

In weiterer Ausgestaltung der Erfindung umfasst die Lageranordnung zwei zueinander beabstandete Wälzlagerringe, zwischen denen der Zuführkanal in die Umfangsnut mündet. Entsprechendes Kühl- und/oder Schmiermittel kann demzufolge nicht nur über die Umfangsnut in den Flüssigkeitskanal des radial innenliegenden Kupplungsteiles geführt werden und demzufolge zur Kühlung beziehungsweise Schmierung des Lamellenpaketes dienen. Vielmehr kann die Kühl- und/oder Schmiermittelzufuhr ergänzend auch zur Schmierung beziehungsweise Kühlung der Wälzlagerringe führen durch entsprechend gewollte Leckage, die zwischen einer Mündung des Zuführkanales und der Umfangsnut zwischen dem Spulenkörper und dem radial innenliegenden Kupplungsteil vorhanden ist.

In weiterer Ausgestaltung der Erfindung umfasst der Zuführkanal einen radial erstreckten Außenabschnitt sowie einen relativ zu einer Radialen geneigten Innenabschnitt, der zwischen den axial beabstandeten Wälzlagerringen hindurchgeführt ist. Dadurch ist es möglich, den Zuführkanal axial versetzt zu dem radial außenliegenden Anschlussbereich des Spulenkörpers zwischen den Wälzlagerringen im Bereich der Umfangsnut münden zu lassen. Die Herstellung der zueinander winklig ausgerichteten Abschnitte, nämlich des Außenabschnittes und des Innenabschnittes, erfolgt vorzugsweise durch zwei separate Bohrungen im Spulenkörper, die sich entsprechend treffen. Ein nicht den Anschlussbereich bildendes Bohrloch im Bereich der Außenkontur des Spulenkörpers wird anschließend verschlossen.

In weiterer Ausgestaltung der Erfindung ist der wenigstens eine Flüssigkeitskanal zu wenigstens einem Lagerschmierkanal hin erstreckt, um wenigstens ein Wälzlager mit Kühl- oder Schmiermittel zu versorgen, das den radial innenliegenden Kupplungsteil relativ zu einem radial außenliegenden Kupplungsabschnitt lagert. Hierdurch ergibt sich eine zusätzliche Funktion für den Flüssigkeitskanal, nämlich eine Versorgungs- und Schmierfunktion für das wenigstens eine Wälzlager.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: zeigt einen Längsschnitt durch eine Ausführungsform einer nicht erfindungsgemäßen Lamellenkupplung und
- Fig. 2: einen Längsschnitt durch eine weitere Ausführungsform einer erfindungsgemäßen Lamellenkupplung.

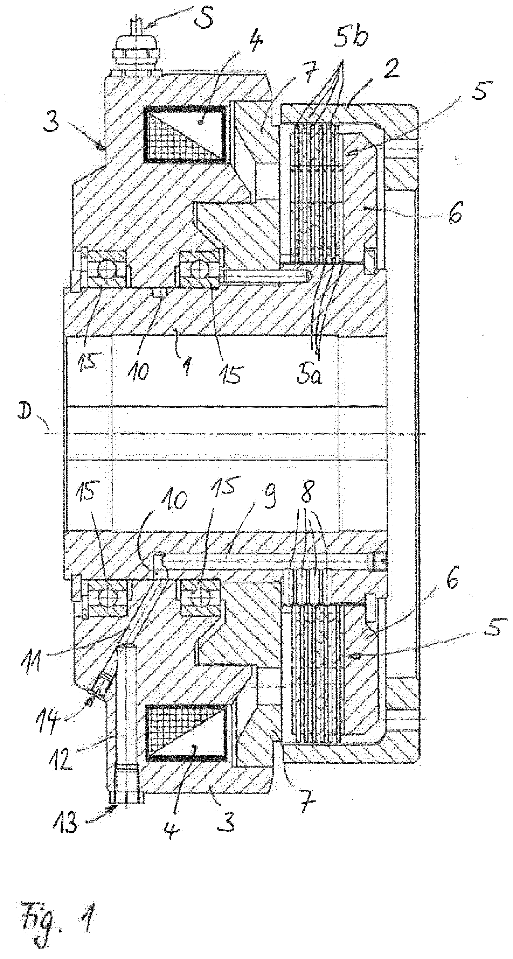

Eine Lamellenkupplung, wie in Fig. 1 dargestellt, weist zwei koaxial zu einer Drehachse D drehbare Kupplungsteile 1, 2 auf, von denen ein radial innenliegender Kupplungsteil 1 nach Art einer Kupplungsnabe gestaltet ist. Der Kupplungsteil 2 ist radial außenliegend relativ zum Kupplungsteil 1 vorgesehen und nach Art einer Kupplungsglocke ausgeführt. Der Kupplungsteil 2 ist mit einer entsprechenden Kupplungsseite eines Antriebsteils verbindbar. Der Kupplungsteil 1 ist abtriebsseitig mit einer zweiten Kupplungsseite in Form einer nicht dargestellten Welle drehschlüssig verbindbar.

Die Lamellenkupplung 3 weist einen blockförmigen Spulenkörper 3 aus Metall auf, in dem eine elektromagnetische, ringförmige Spulenanordnung 4 integriert ist. Der Spulenkörper 3 umschließt den als Kupplungsnabe gestalteten Kupplungsteil 1 ringförmig. Zur Lagerung des Kupplungsteiles 1 in dem Spulenkörper 3 sind zwei Wälzlagerringe 15 vorgesehen, die axial zueinander beabstandet in dem Spulenkörper 3 angeordnet sind und die Kupplungsnabe lagern. Der Spulenkörper 3 ist in nicht näher dargestellter Weise stationär gehalten.

Zwischen einem Außenumfang des radial innenliegenden Kupplungsteiles 1 und einem Innenumfang des als Kupplungsglocke gestalteten, radial außenliegenden Kupplungsteiles 2 erstreckt sich ein Lamellenpaket aus mehreren ringförmigen Lamellenscheiben 5a, 5b. Die Lamellenscheiben 5a sind drehschlüssig auf einer nicht näher bezeichneten Axialverzahnung des Außenumfangs des Kupplungsteiles 1 gehalten. Die Lamellenscheiben 5b hingegen sind drehschlüssig an dem Innenumfang des radial außenliegenden Kupplungsteiles 2 gehalten. Alle Lamellenscheiben 5a, 5b sind axial verschiebbar gelagert. Das Lamellenpaket aus den alternierend parallel axial hintereinander angeordneten Lamellenscheiben 5a, 5b ist axial zwischen einer mit dem innenliegenden Kupplungsteil 1 drehfest verbundenen Druckscheibe 7 und einer axial verschiebbaren Ankerscheibe 6 positioniert. Die Ankerscheibe 6 ist auf der zu der Druckscheibe 7 gegenüberliegenden Stirnseite des Lamellenpaketes positioniert und ebenfalls drehfest zu dem innenliegenden Kupplungsteil 1 gehalten.

Sobald die Spulenanordnung 4 über eine elektrische Steuereinheit bestromt wird, übt das entsprechend gebildete elektromagnetische Feld eine axiale Anziehungskraft auf die Ankerscheibe 6 aus, wodurch die Ankerscheibe 6 das Lamellenpaket gegen die Druckscheibe 7 presst, und wodurch gleichzeitig die alternierend dem inneren und dem äußeren Kupplungsteil 1, 2 zugeordneten Lamellenscheiben 5a, 5b zusammengepresst werden. Hierdurch wird ein Kraftschluss zwischen dem innenliegenden Kupplungsteil 1 und dem außenliegenden Kupplungsteil 2 erzielt, wodurch ein entsprechend gewünschter Schaltvorgang der Lamellenkupplung vollzogen ist.

Die Spulenanordnung 4 wird über Stromleitungen S mit Strom versorgt, die zu der elektrischen Steuereinheit führen, die nicht näher dargestellt ist.

Zur Kühlung und Schmierung des Lamellenpaketes sind im innenliegenden Kupplungsteil 1 Kanalabschnitte 8 bis 10 integriert, die Flüssigkeitskanäle im Sinne der Erfindung bilden. Der Kanalabschnitt 10 ist als Ringkanalabschnitt in Form einer radial nach außen offenen Umfangsnut ausgeführt. An den Ringkanalabschnitt schließt ein Axialkanalabschnitt 9 an, der parallel zur Drehachse D in dem Kupplungsteil 1 erstreckt ist. Von dem Axialkanalabschnitt 9 aus zweigen mehrere Radialkanalabschnitte 8 radial nach außen ab, die im Bereich eines Innenumfangs des Lamellenpaketes am Außenumfang des innenliegenden Kupplungsteiles 1 münden. Die Radialkanalabschnitte 8 dienen dazu, entsprechende Kühl- oder Schmierflüssigkeit den Lamellenscheiben 5a, 5b des Lamellenpaketes 5 zuzuführen, um so bei hohen Temperaturen aufgrund harter Betriebsbedingungen der Lamellenkupplung eine Kühlung und Schmierung im Bereich des Lamellenpaketes 5 zu erzielen. Die Kühl- oder Schmiermittelzufuhr wird radial von außen her gespeist über einen Anschlussbereich 13, der in einen Zuführkanal 11, 12 fortgesetzt ist. Der Zuführkanal 11, 12 ist in dem Spulenkörper 3 integriert und erstreckt sich radial vom Anschlussbereich 13 aus durch den Spulenkörper 3 hindurch nach innen. Ein Innenabschnitt 11 des Zuführkanals 11, 12 mündet im Bereich eines Innenumfangs des Spulenkörpers 3 in dem als Umfangsnut gestalteten Ringkanalabschnitt 10. Vom Ringkanalabschnitt 10 aus wird die entsprechende Kühl- oder Schmiermittelflüssigkeit über den Axialkanalabschnitt 9 den Radialkanalabschnitten 8 zugeführt.

Die Herstellung des Zuführkanales 11, 12 erfolgt durch zwei voneinander getrennte Bohrungen, von denen die Bohrung für den Außenabschnitt 12 als Sackbohrung gestaltet ist, die in die den Innenabschnitt 11 bildende Bohrung des Zuführkanals 11, 12 mündet. Der Außenabschnitt 12 des Zuführkanales 11, 12 erstreckt sich radial von außen nach innen, axial versetzt an der Spulenanordnung 4 vorbei. Der Innenabschnitt 11 hingegen erstreckt sich geradlinig in winkliger Ausrichtung sowohl mit Radial- als auch mit Axialkomponenten schräg von außen nach innen. Im Bereich einer Außenkontur der Spulenkörpers 3 ist der den Innenabschnitt 11 bildende Kanal durch einen Stopfen 14 verschlossen. Der Innenabschnitt 11 mündet exakt auf axialer Höhe des Ringkanals 10 in diesen und damit im Bereich einer Trennlinie zwischen dem Innenumfang des Spulenkörpers 3 und dem mantelförmigen Außenumfang des radial innenliegenden Kupplungsteiles 1. Der Ringkanalabschnitt 10 ist drehbeweglich relativ zum Zuführkanal 11, 12 gelagert. Ein entsprechendes Kühl- oder Schmiermittel, das über den Zuführkanal 11, 12 vom Anschlussbereich 13 aus radial nach innen zugeführt wird, wird zum einen in die Flüssigkeitskanäle 8 bis 10 geführt. Zum anderen kann eine gewisse Flüssigkeitsleckage an der Trennlinie zwischen dem Innenumfang des Spulenkörpers 3 und dem Außenmantel des Kupplungsteiles 1, an dem die Wälzlagerringe 15 positioniert sind, zu den Wälzlagerringen 15 strömen und so ergänzend eine Schmierung und/oder Kühlung dieser Wälzlagerringe 15 im Betrieb der Lamellenkupplung erreichen.

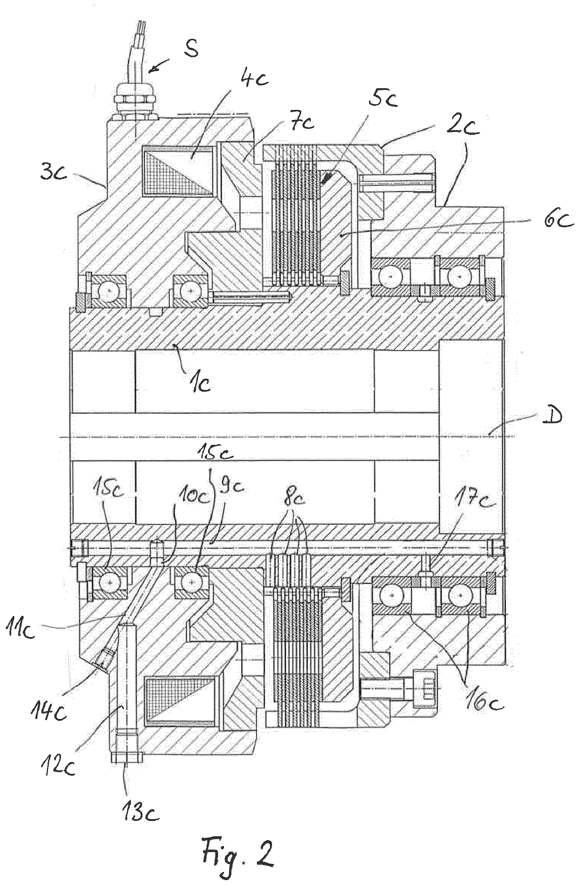

Eine schaltbare Lamellenkupplung gemäß Fig. 2 entspricht im Wesentlichen der zuvor anhand der Fig. 1 beschriebenen Lamellenkupplung. Zur Vermeidung von Wiederholungen wird daher bezüglich funktionsgleicher Teile und Abschnitte auf die Offenbarung zu der Lamellenkupplung gemäß Fig. 1 verwiesen. Funktionsgleiche Teile und Abschnitte sind mit gleichen Bezugszeichen unter Hinzufügung des Buchstabens c versehen. Nachfolgend wird auf die Unterschiede der Lamellenkupplung gemäß Fig. 2 eingegangen.

Wesentlicher Unterschied bei der Lamellenkupplung gemäß Fig. 2 ist es, dass der radial innenliegende Kupplungsteil 1c koaxial zur Drehachse D axial von dem Spulenkörper 3c weg gegenüber dem Kupplungsteil 1 verlängert ist. Der entsprechend verlängerte Abschnitt des Kupplungsteiles 1c ist durch eine zusätzliche Wälzlageranordnung 16c relativ zu einem radial außenliegenden Kupplungsteil 2c abgestützt, der mehrteilig gestaltet ist. Der radial außenliegende Kupplungsteil 2c weist einen glockenartigen Teilabschnitt auf, der dem Kupplungsteil 2 gemäß Fig. 1 entspricht. Mit dem glockenartigen Teilabschnitt fest verbunden ist ein weiterer, axial an den glockenartigen Teilabschnitt anschließender Kupplungsabschnitt des Kupplungsteiles 2c, der über zwei Wälzlagerringe der Wälzlageranordnung 16c relativ zum radial innenliegenden Kupplungsteil 1c abgestützt ist.

Um eine einfache Kühlung und Schmierung der Wälzlageranordnung 16c vornehmen zu können, ist der in der Ausführungsform gemäß Fig. 1 bereits offenbarte Axialkanalabschnitt 9c innerhalb des Kupplungsteiles 1c axial verlängert über eine axiale Höhe der Wälzlageranordnung 16c hinaus fluchtend und achsparallel zur Drehachse D. Von dem verlängerten Teilbereich des als Flüssigkeitskanal dienenden Axialkanalabschnittes 9c zweigt auf axialer Höhe der Wälzlageranordnung 16c radial nach außen ein Lagerschmierkanal 17c ab, der in einen nicht näher bezeichneten Ringkanal mündet, der axial zwischen den beiden Wälzlagerringen der Wälzlageranordnung 16c vorgesehen ist. Es können mehrere Lagerschmierkanäle 17c über den Umfang des innenliegenden Kupplungsteiles 1c verteilt in dem Kupplungsteil 1c integriert sein, die alle in den nicht näher bezeichneten Ringkanal münden. Durch die beschriebene Ausgestaltung ist eine Schmierung der Wälzlageranordnung 16c mittels der Kühl- oder Schmierflüssigkeit gewährleistet, die über den Zuführkanal 11c, 12c zuführbar ist.

## Patentansprüche

1. Schaltbare Lamellenkupplung mit einem Lamellenpaket (5), das mehrere mit einem - relativ zu einer Kupplungsdrehachse (D) - radial innenliegenden Kupplungsteil (1) drehschlüssige Lamellenscheiben (5a) sowie mehrere mit einem radial außenliegenden Kupplungsteil (2) drehschlüssige Lamellenscheiben (5b) aufweist, sowie mit einer axial beweglichen Ankerscheibe (6), die in einer Lüftstellung das Lamellenpaket (5) freigibt und in einer Reibstellung die Lamellenscheiben (5a, 5b) des Lamellenpaketes (5) axial gegeneinander presst, sowie mit einem Spulenkörper (3), in dem eine elektromagnetische Spulenanordnung (4) zur axialen Beaufschlagung der Ankerscheibe (6) integriert ist, wobei wenigstens ein Flüssigkeitskanal (8 bis 10) zur Zufuhr eines Kühl- oder Schmiermittels zu den Lamellenscheiben (5a, 5b) in dem radial innenliegenden Kupplungsteil (1) integriert ist, und wobei wenigstens ein Zuführkanal (11, 12) durch den Spulenkörper (3) hindurch verläuft, der einen an einem Außenmantel des Spulenkörpers (3) vorgesehenen Anschlussbereich (13) für eine Kühl- oder Schmiermittelzufuhr mit dem wenigstens einen Flüssigkeitskanal (8 bis 10) verbindet, **dadurch gekennzeichnet, dass** der Zuführkanal (11, 12) im Bereich einer Lageranordnung (15) des Spulenkörpers (3) relativ zu dem rotierbaren Kupplungsteil (1) derart mündet, dass im Betrieb der Lamellenkupplung zusätzlich eine Kühlung und Schmierung der Lageranordnung (15) erfolgt.

2. Schaltbare Lamellenkupplung nach Anspruch 1, **dadurch gekennzeichnet, dass** der wenigstens eine Flüssigkeitskanal (8 bis 10) in dem relativ zu dem Spulenkörper (3) rotierbaren, radial innenliegenden Kupplungsteil (1) integriert ist, und dass an einem Außenumfang des Kupplungsteiles (1) eine Umfangsnut (10) vorgesehen ist, in die der Zuführkanal (11, 12) des Spulenkörpers (3) mündet.

3. Schaltbare Lamellenkupplung nach Anspruch 1, **dadurch gekennzeichnet, dass** die Lageranordnung zwei zueinander axial beabstandete Wälzlagerringe (15) umfasst, zwischen denen der Zuführkanal (11, 12) in die Umfangsnut (10) mündet.

4. Schaltbare Lamellenkupplung nach einem der vorhergehenden Ansprüche, **dadurch gekennzeichnet, dass** der Zuführkanal (11, 12) einen radial erstreckten Außenabschnitt (12) sowie einen relativ zu einer Radialen geneigten Innenabschnitt (11) umfasst, der zwischen den axial beabstandeten Wälzlagerringen (15) hindurchgeführt ist.

5. Schaltbare Lamellenkupplung nach einem der vorhergehenden Ansprüche, **dadurch gekennzeichnet, dass** der wenigstens eine Flüssigkeitskanal (8c bis 10c) zu wenigstens einem Lagerschmierkanal (17c) hin erstreckt ist, um wenigstens ein Wälzlager (16c) mit Kühl- oder Schmiermittel zu versorgen, das den radial innenliegenden Kupplungsteil (1c) relativ zu einem radial außenliegenden Kupplungsabschnitt (2c) lagert.

## Claims

1. Switchable multi-plate coupling, comprising a multi-plate pack (5) which has - in relation to an axis of rotation of the coupling (D) - a plurality of multi-plate discs (5a) co-rotating with a radially inner coupling part (1) and a plurality of multi-plate discs (5b) co-rotating with a radially outer coupling part (2), and comprising an axially movable armature disc (6), which armature disc releases the multi-plate pack (5) in a release position and presses the multi-plate discs (5a, 5b) of the multi-plate pack (5) axially against each other in a friction position, and comprising a coil body (3) with an electromagnetic coil arrangement (4) integrated therein for axial acting on the armature disc (6), wherein at least one liquid channel (8 to 10) for supplying a coolant or lubricant to the multi-plate discs (5a, 5b) is integrated in the radially inner coupling part (1), and wherein at least one supply channel (11, 12) passes through the coil body (3) connecting a connector region (13) for coolant or lubricant supply provided on an outer shell of the coil body (3) to the at least one liquid channel (8 to 10),
**characterized in that**
the supply channel (11, 12) ends in the region of a bearing arrangement (15) of the coil body (3) relative to the rotatable coupling part (1) in such a manner that, during operation of the multi-plate coupling, cooling and lubrication of the bearing arrangement (15) is achieved in addition.

2. Switchable multi-plate coupling according to claim 1, **characterized in that** the at least one liquid channel (8 to 10) is integrated in the radially inner coupling part (1) which is rotatable in relation to the coil body (3), and **in that** a circumferential groove (10) is provided on an outer circumference of the coupling part (1), into which groove the supply channel (11, 12) of the coil body (3) leads.

3. Switchable multi-plate coupling according to claim 1, **characterized in that** the bearing arrangement comprises two mutually axially spaced roller bearing rings (15), between which rings the supply channel (11, 12) leads into the circumferential groove (10).

4. Switchable multi-plate coupling according to any one of the preceding claims, **characterized in that** the supply channel (11, 12) comprises a radially extending outer portion (12) and an inner portion (11) inclined in relation to a radial, which inner portion is passed between the axially spaced roller bearing rings (15).

5. Switchable multi-plate coupling according to any one of the preceding claims, **characterized in that** the at least one liquid channel (8c to 10c) extends towards at least one bearing lubrication channel (17c) in order to supply at least one roller bearing (16c) with coolant or lubricant, which roller bearing is for bearing the radially inner coupling part (1c) in relation to a radially outer coupling part (2c).

## Revendications

1. Embrayage multidisque commutable comprenant un pack multidisque (5) présentant - par rapport à un axe de rotation d'embrayage (D) - une pluralité de disques à lamelles (5a) liés en rotation à une partie d'embrayage (1) radialement intérieure ainsi qu'une pluralité de disques à lamelles (5b) liés en rotation à une partie d'embrayage (2) radialement extérieure, ainsi que comprenant un disque d'armature (6) mobile axialement, le disque d'armature déclenchant le pack multidisque (5) dans une position de desserrage et pressant les disques à lamelles (5a, 5b) du pack multidisque (5) axialement l'un contre l'autre dans une position de friction, ainsi que comprenant un corps de bobine (3) où un arrangement de bobine (4) électromagnétique est intégré pour agir axialement sur le disque d'armature (6), dans lequel au moins un canal à liquide (8 à 10) pour l'alimentation d'un agent réfrigérant ou agent lubrifiant aux disques à lamelles (5a, 5b) est intégré dans la partie d'embrayage (1) radialement intérieure, et dans lequel au moins un canal d'alimentation (11, 12) s'étend au travers du corps de bobine (3), le canal d'alimentation raccordant une zone de rattachement (13) pour une alimentation en agent réfrigérant ou agent lubrifiant prévue sur une enveloppe extérieure du corps de bobine (3) à l'au moins un canal à liquide (8 à 10),
**caractérisé en ce que**
le canal d'alimentation (11, 12) débouche sur la zone d'un agencement de palier (15) du corps de bobine (3) par rapport à la partie d'embrayage (1) rotative de telle manière que, pendant le fonctionnement de l'embrayage multidisque, un refroidissement et une lubrification supplémentaire de l'agencement de palier (15) se produit.

2. Embrayage multidisque commutable selon la revendication 1, **caractérisé en ce que** l'au moins un canal à liquide (8 à 10) est intégré dans la partie d'embrayage (1) radialement intérieure et rotative par rapport au corps de bobine (3), et **en ce qu'**une rainure périphérique (10) est prévue sur une circonférence extérieure de la partie d'embrayage (1), le canal d'alimentation (11, 12) du corps de bobine (3) débouchant dans la rainure.

3. Embrayage multidisque commutable selon la revendication 1, **caractérisé en ce que** l'agencement de palier comprend deux bagues de palier à rouleaux (15) axialement espacées l'une de l'autre, le canal d'alimentation (11, 12) débouchant entre lesdites bagues dans la rainure périphérique (10).

4. Embrayage multidisque commutable selon l'une quelconque des revendications précédentes, **caractérisé en ce que** le canal d'alimentation (11, 12) comprend une section extérieure (12) s'étendant radialement ainsi qu'une section intérieure (11) inclinée par rapport à une radiale, la section étant passée entre les bagues de palier à rouleaux (15) axialement espacées.

5. Embrayage multidisque commutable selon l'une quelconque des revendications précédentes, **caractérisé en ce que** l'au moins un canal à liquide (8c à 10c) s'étend vers au moins un canal de lubrification du palier (17c) afin d'alimenter en agent réfrigérant ou agent lubrifiant au moins un palier à rouleau (16c) servant de palier pour la partie d'embrayage (1c) radialement intérieure par rapport à la partie d'embrayage (2c) radialement extérieure.
